# EUROPÄISCHE PATENTANMELDUNG

(11) **EP 2 805 859 A1**
(43) Veröffentlichungstag der Anmeldung: **26.11.2014**
(21) Anmeldenummer: 13168750.1
(22) Anmeldetag: 22.05.2013
(51) Int. Cl.: B60T 7/16, B60T 7/18, B60T 13/66, B60T 17/22

(54) **Einrichtung und Verfahren zur Durchführung von geführten Bremsproben an Schienenfahrzeugen**

(71) Anmelder: Prose AG, 8400 Winterthur (CH)
(72) Erfinder: Zwicky, Peter, 8252 Schlatt (CH)
(74) Vertreter: Werner, André

(57) **Zusammenfassung**

Die vorliegende Einrichtung (1) beinhaltet ein mobiles, beispielsweise auf die Hauptluftleitung am letzten Wagen aufsetzbares, als Kupplungskopf ausgebildetes Gerät (11) mit einem Kommunikationsmodul (22). Dessen Werte werden vorzugsweise drahtlos, beispielsweise mit Bluetooth oder Wifi an ein Kommunikationsgerät (12,13) des Wagenmeisters / Visiteurs und des Lokomotivführers übertragen und dort angezeigt und innerhalb des menügeführten Ablaufs als Istwerte festgehalten.

## Beschreibung

Gegenstand der Erfindung ist eine Einrichtung und Verfahren zur Durchführung von geführten Bremsproben an Schienenfahrzeugen, insbesondere für lokbespannte Eisenbahnzüge mit variabler Wagenzusammenstellung, wie sie beispielsweise bei Güterzügen häufig anzutreffen sind.

Das sichere Bedienen und Prüfen der Bremsen von Schienenfahrzeugen im Betrieb ist eines der Kernelemente bei der Durchführung des Eisenbahnbetriebs. Die beispielsweise im Allgemeinen Eisenbahngesetz (AEG) und der Eisenbahn - Bau- und Betriebsordnung (EBO) gemachten Vorgaben beinhalten hierzu jedoch keine Handlungsanweisungen. Diese sind in den betrieblich - technischen Regelwerken der Eisenbahnbetreiber festgeschrieben. In der VDV-Schrift 757 sind zudem die bisher unterschiedlichen Regeln zum Bedienen und Prüfen von Bremsen zum Betrieb auf öffentlicher Infrastruktur der Eisenbahnen in einem gemeinsam abgestimmten, einheitlichen Regelwerk vereinigt. Die VDV-Schrift entspricht zum grössten Teil dem Wortlaut der Richtlinie 915.01 (Bremsen im Betrieb, bedienen und prüfen) der Deutschen Bahn AG. In der Schweiz hat das Bundesamt für Verkehr (BAV) die schweizerischen Fahrdienstvorschriften (FDV) auf Basis der Eisenbahnverordnung (EBV) im entsprechenden Regelwerk R 300.1-.15 veröffentlicht.

Um die Funktion der durchgehenden automatischen Druckluftbremsen zu überprüfen, welche in Schienenfahrzeugen als Hauptbremssystem eingesetzt werden, findet nach der Zugzusammenstellung eine Bremsprobe statt. Sie ist eine elementare Voraussetzung für die Zugvorbereitung, deren Ablauf und Form genau vorgeschrieben sind und die nur von ausgebildeten Berechtigten (Zugführer, Wagenmeister, oder beispielsweise in der Schweiz von Visiteuren) durchgeführt werden dürfen. Zur Verständigung zwischen diesen Berechtigten und dem Lokomotivführer gibt es spezielle Signale, die mit Licht, Handzeichen oder direkt mündlich übermittelt werden können.

Die Bremsprobe wird durchgeführt, um sicherzustellen, dass alle Bremsen vom während der Fahrt zu bedienenden Führerbremsventil ordnungsgemäss angelegt und gelöst werden können und die Hauptluftleitung durchgehend gekuppelt ist. Dabei wird zwischen einer vollen Bremsprobe (z. B. bei einem neugebildeten Zug) und einer vereinfachten Bremsprobe (z. B. bei einer Zugabstellzeit von über einer Stunde) unterschieden.

Bei einer vollen Bremsprobe sind der Zustand und die Funktion der Bremsen aller Fahrzeuge eines Zuges als Prozess in folgenden Prüfabschnitten und festgelegter Reihenfolge zu prüfen:
1. Zustand prüfen (Zustandsgang)
2. Füll- bzw. Lösezustand feststellen
3. Dichtheit prüfen
4. Bremsen anlegen
5. Bremszustand feststellen (Anlegegang)
6. Bremse lösen
7. Lösezustand feststellen (Lösegang)
8. Bremse (und Zugschluss) in Ordnung melden

Bei der vereinfachten Bremsprobe überprüft der Berechtigte am letzten Fahrzeug die Funktion der Bremsen als Prozess in folgenden Prüfabschnitten mit festgelegter Reihenfolge:
1. Lösezustand am letzten Fahrzeug feststellen
2. Bremszustand feststellen
3. auf freien Durchgang prüfen
4. Lösezustand feststellen

Hierzu wird vom Berechtigten der Lösezustand der Bremse am letzten Fahrzeug optisch festgestellt und anschliessend dem Lokomotivführer der Auftrag "Bremse anlegen" gegeben. Dieser leitet daraufhin eine Betriebsbremsung ein, indem er den Hauptluftleitungsdruck absenkt. Der Berechtigte überprüft nun das ordnungsgemässe Anlegen der Bremsen und gibt dem Lokomotivführer den Auftrag, mit dem Führerbremsventil in Mittelstellung zu gehen, um ein Nachspeisen der Hauptluftleitung zu verhindern. Danach führt er die sogenannte "Durchgangsprüfung" durch, indem er den Luftabsperrhahn am letzten Fahrzeug öffnet und sich vom Lokomotivführer bestätigen lässt, dass ein Druckabfall eingetreten ist. Anschliessend gibt er den Auftrag, die Bremsen wieder zu lösen. Geschieht auch das ordnungsgemäss, wird dem Lokomotivführer mit einem der vorgenannten Signale die Bremse als in Ordnung gemeldet.

Mit der DE 198 33 279 A1 und DE 298 24 583 U1 sind Einrichtungen zur Überprüfung der Bremsprobe bei lokbespannten Zügen bekannt, die aber mit einem umfangreichen Equipment in erster Linie zur Überwachung der Zugvollständigkeit dienen. Nachteilig im Sinne der Durchführung von ortsunabhängigen Bremsproben ist hierbei der Verbleib des Zugschlussgerätes dieser Einrichtung am letzten Wagen des Zuges, sowie einer notwendigen elektrischen oder optischen Verbindungsleitung vom Ende des Zuges zum Führerstand, um die Meldung über den Zustand und der Vollständigkeit des Zugverbandes zu übermitteln.

Die DE 10 2010 025 346 B4 offenbart eine Vorrichtung und Verfahren zum Funkfernsteuern eines mobilen Bremsprobegerätes, bestehend aus einer Fernwirkeinheit, einer Motoreinheit, einem mobilen Kommunikationsendgerät und einer Datenfernübertragungseinrichtung. Dabei steuert und überwacht die Fernwirkeinheit die Motoreinheit anhand von Befehlen, die ihr von dem mobilen Kommunikationsendgerät durch die Datenfernübertragungseinrichtung übermittelt werden. Die Motoreinheit bedient dabei direkt oder indirekt die zur manuellen Bedienung des Bremsprobengerätes vorgesehenen Bedienelemente.

Der vorliegenden Erfindung liegt die Aufgabe zugrunde, eine technisch einfache und zuverlässige Einrichtung und Verfahren zur Durchführung von Bremsproben von Schienenfahrzeugen mit Druckluftbremsen unter Berücksichtigung der zuvor benannten feststehenden Prozesse, zu schaffen.

Diese Aufgabe wird erfindungsgemäss durch eine Einrichtung mit den Merkmalen gemäss Anspruch 1 gelöst. Weitere Ausführungsformen ergeben sich aus den Merkmalen der Ansprüche 2 bis 8. Die Aufgabe wird weiter erfindungsgemäss durch eine BremsprobenEinrichtung mit den Merkmalen nach Anspruch 12 gelöst. Eine weitere Ausführungsform ergibt sich aus den Merkmalen von Anspruch 13.

Im Gegensatz zu den eingangs beschriebenen Lösungen weist die erfindungsgemässe Einrichtung einen wesentlich einfacheren Aufbau auf. Sie beinhaltet ein als Kupplungskopf ausgebildetes mobildes Gerät. Dessen Werte werden mittels eines Kommunikationsmoduls auf ein einrichtungsfremdes Kommunikationsgerät, beispielsweise Funktelefon oder Tabletcomputer des Wagenmeisters / Visiteurs und des Lokomotivführers übertragen und können dort angezeigt und innerhalb des menügeführten Ablaufs als Istwerte festgehalten werden.

In einer Ausführungsform der Einrichtung weist das Gerät Verbindungsmittel auf, um mit der Hauptluftleitung eines Schienenfahrzeuges verbunden zu werden. Dabei handelt es sich beispielsweise um mechanische Verbindungsmittel. Die Hauptluftleitung dient dem Betrieb der Druckluftbremsen der Schienenfahrzeuge.

In einer weiteren Ausführungsform der Einrichtung weist das Gerät einen Druckaufnehmer und Batterien auf, die mit dem Kommunikationsmodul in Wirkverbindung stehen. Der Druckaufnehmer erfasst den in der Hauptluftleitung herrschenden aktuellen Luftdruck.

In einer weiteren Ausführungsform weist das Gerät einen Handgriff zum einfachen Verbinden und Lösen des Gerätes von einer Hauptluftleitung eines Schienenfahrzeuges auf. Vorzugsweise sind das Kommunikationsmodul, der Druckaufnehmer und die Batterien in diesem Handgriff des Gerätes angeordnet. Damit sind diese Komponenten einerseits platzsparend und andererseits gegen äussere Einflüsse geschützt angeordnet.

In einer weiteren Ausführungsform ist das Kommunikationsmodul von einem einrichtungsfremden Kommunikationsgerät steuerbar ausgebildet. Damit können Einstellungen am Kommunikationsmodul ferngesteuert vorgenommen werden und ggf. Daten abgerufen werden.

In einer weiteren Ausführungsform ist das Kommunikationsmodul als drahtloses Kommunikationsmodul ausgebildet, vorzugsweise für Funkübertragung wie beispielsweise Bluetooth-Übertragungsverfahren. Bei eingeschränkter Signalqualität kann alternativ auch das konventionelle Netz des Kommunikationsgerätes genutzt werden.

In einer weiteren Ausführungsform ist das Kommunikationsmodul derart ausgebildet, dass es mit dem einrichtungsfremden Kommunikationsgerät Identifikationsmerkmale austauscht, insbesondere persönliche Identifikationsmerkmale des Benutzers des Kommunikationsgerätes. Dies kann im einfachsten Fall ein Benutzerkürzel oder Benutzername oder eine andere, zur eindeutigen Identifikation geeignetes Identifikationsmerkmal sein.

Ein Vorteil der erfindungsgemässen Einrichtung besteht darin, dass bei der Verwendung einer Applikation auf dem Kommunikationsgerät die Benutzer (Wagenmeister / Visiteure resp. Lokomotivführer) automatisch durch den gesamten Prozess geführt werden. Somit sind falsche oder vergessene Bedienschritte, die in der Vergangenheit im Betrieb häufig zu Unfällen geführt haben, ausgeschlossen. Ausserdem werden bei dem erfindungsgemässen Verfahren die Verantwortlichkeiten eindeutig dokumentiert. Dies erfolgt beispielsweise durch eine vorgängige Personenidentifikation mittels adaptierten Kartenlesern an den Kommunikationsgeräten. Anstelle der Kartenleser kann für die Personalidentifikation auch die an sich bekannte QR-Code Technologie (2-dimensionaler grafischer Code) genutzt werden. In diesem Fall besitzen die Kommunikationsgeräte eine eingebaute Kamera und die Decodierung des Codes ist in einer entsprechenden Applikation (APP) realisiert.

Die erfindungsgemässe Lösung einer derartigen Einrichtung hat den Vorteil einer einfachen ortsunabhängigen Systemkonfiguration für geführte Bremsproben von lokbespannten Zügen beliebiger Zugbildung, insbesondere für Güterzüge. Dabei kommuniziert eine erfindungsgemässe Einrichtung von der Hauptluftleitung des letzten Wagens aus beispielsweise per Bluetooth oder Wifi, alternativ auch über das konventionelle Netz mit den Kommunikationsgeräten (Handheld mit adaptiertem Kartenleser / integrierter Kamera) des Wagenmeisters / Visiteurs und dem Lokomotivführer im Führerstand der Lokomotive. Bei einer erfindungsgemässen Lösung sind hierzu weder eine durchgehende elektrische Verbindungsleitung noch eine zusätzliche Verkabelung erforderlich, da die Kommunikation kabellos beispielsweise via Bluetooth oder Wifi vorteilhaft auf bereits vorhandenen Geräten wie beispielsweise Handhelds basiert.

Ein Merkmal der erfindungsgemässen Einrichtung ist seine eindeutige individualisierte Identifikation, indem das Gerät dem jeweiligen Berechtigten (Lokomotivführer, Zugführer, Wagenmeister, in der Schweiz dem Visiteur) persönlich zugeordnet ist. Damit wird nicht nur die Handlungskette einer Bremsprobe nachvollziehbar, sondern es können im Sinne einer Qualitätssicherung und Rückverfolgbarkeit auch die Uhrzeiten und die handelnden Personen als individualisierte Daten in den Geräten dokumentiert werden. Dies betrifft ebenso den jeweiligen Lokomotivführer, dessen mobiles Kommunikationsgerät (Handheld) mit der erfindungsgemässen Einrichtung kommuniziert.

Weiter wird erfindungsgemäss in Anspruch 9 ein Verfahren zur Durchführung von geführten Bremsproben mit der erfindungsgemässen Einrichtung vorgeschlagen. Weitere Ausführungsformen ergeben sich aus den Merkmalen der Ansprüche 10 bis 11.

Gemäss einer Ausführungsform der Erfindung wird der jeweilige Prozess einer vollen oder vereinfachten Bremsprobe mit den zuvor beschriebenen Prüfabschnitten und in der jeweils vorgeschriebenen Reihenfolge von einer erfindungsgemässen Einrichtung automatisch abgearbeitet. Hierdurch erfährt der bisherige Bremsprobenprozess keinerlei Änderungen und eine erfindungsgemässe Einrichtung führt unabhängig von menschlichem Handeln die alleinige Kontrolle über den gesamten Prozess, so dass Bedien- oder Interpretationsfehler ausgeschlossen sind. Die Uhrzeit und die handelnden Personen werden hierbei ebenfalls automatisch dokumentiert, so dass sie jederzeit wieder persönlich identifiziert werden können. Somit sind inskünftig Eisenbahnunfälle, welche auf Handlungsfehler oder unzureichender Bremsprüfung zurückzuführen sind, ausgeschlossen. Ausserdem können mit einer erfindungsgemässen Einrichtung sämtliche Aktivitäten und Daten (Zug - Nr. / Datum / Uhrzeit / Prüfablauf / Zugschlussfreigabecode), sowie die Akteure einer Bremsprobe (Lokomotivführer- und Prüfer - ID) jederzeit rückverfolgbar aufgezeichnet werden.

Auch bedarf es bei einer erfindungsgemässen Lösung keinerlei fahrzeugseitigen Ein- resp. Umbauten z.B. auf den Triebfahrzeug - Führerständen, da die Einrichtung zur Verwendung von vorrichtungsfremden, vorhandenen Geräten wie Handhelds des Lokomotivführers ausgelegt ist. Dies erlaubt eine fliessende Einführung der erfindungsgemässen Technologie ohne aufwändige Umbauten und Stillstandzeiten der Triebfahrzeuge.

Eine erfindungsgemässe Lösung kann ergänzt werden unter Nutzung der GPS - Daten der verwendeten Handhelds. So werden die Auswertung der geografischen Lage und eine Zuglängenbestimmung möglich (Distanz der Handhelds oder Fussstrecke der berechtigten Wagenmeister bzw. Visiteure).

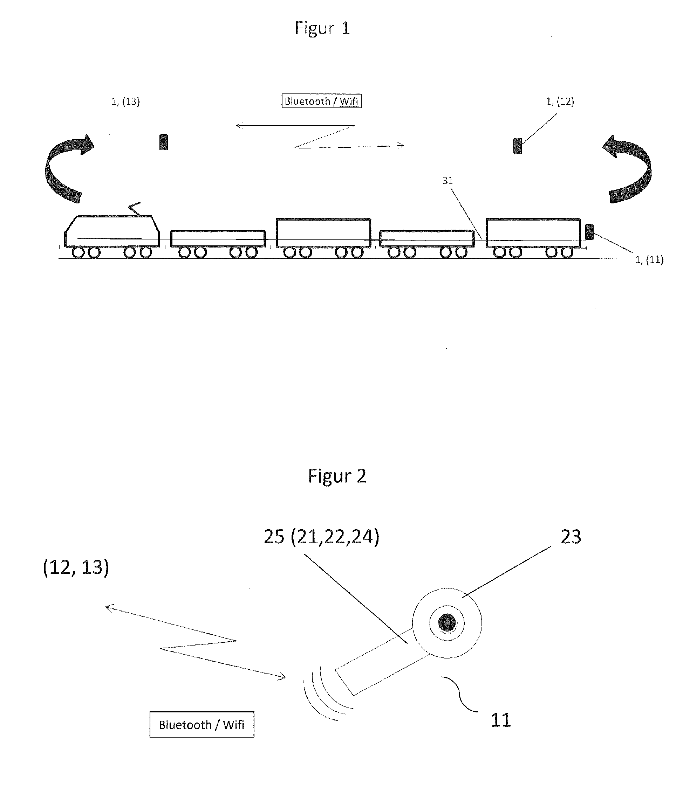

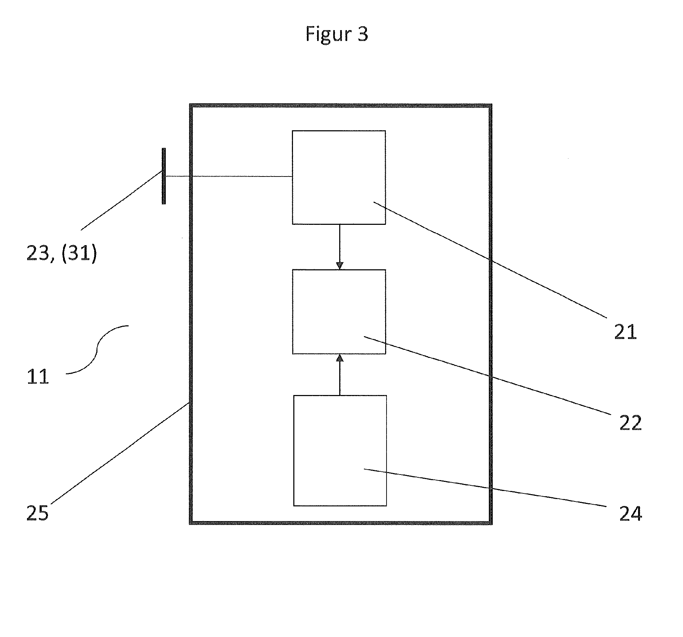

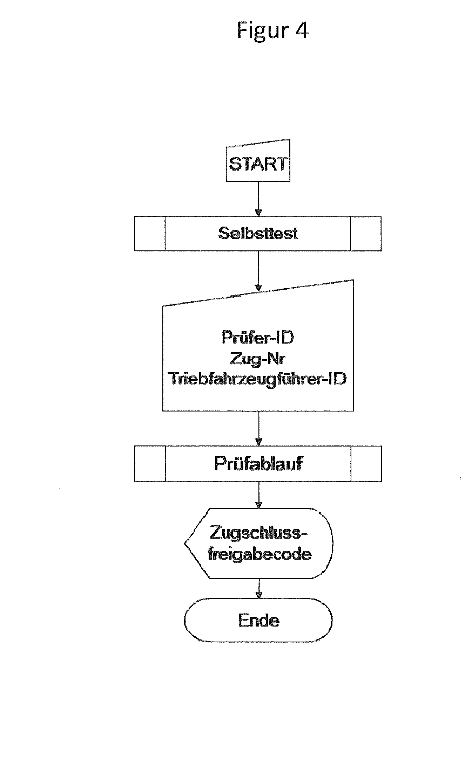

Die erfindungsgemässe Einrichtung ist anhand der Darstellungen in den Figuren 1 bis 4 beispielhaft erläutert. Hierbei zeigen:
Figur 1 eine Systemkonfiguration einer erfindungsgemässen Einrichtung (1) zur Durchführung von geführten Bremsproben anhand eines schematisch dargestellten lokbespannten Zuges, der mit einer durchgehenden Hauptluftleitung (31) ausgerüstet ist;
Figur 2 ein als Kupplungskopf ausgebildetes mobiles Gerät (11) mit Verbindungsmitteln (23) zur Durchführung von geführten Bremsproben am Zugsende eines lokbespannten Zuges, mit einem Handgriff (25) zum Aufsetzen an dessen Hauptluftleitung (31) und zur Kommunikation mit den Handheld - Geräten (12, 13) des Wagenmeisters / Visiteurs und / oder des Lokomotivführers auf der Lokomotive;
Figur 3 den schematischen Aufbau eines mobilen Kupplungskopfes (11) mit einem Handgriff (25) zum Aufsetzen auf die Hauptluftleitung (31), welcher einen Druckaufnehmer (21), ein integriertes Bluetooth-Modul (22) und Batterien (24) beinhaltet; und
Figur 4 eine schematisch dargestellte Ablaufgrafik einer geführten Bremsprobe mit der Systemkonfiguration einer erfindungsgemässen Einrichtung (1).

Eine Einrichtung (1) zur Durchführung von geführten Bremsproben weist ein als Kupplungskopf ausgebildetes mobiles Gerät (11) auf, in dessen Handgriff (25) ein Druckaufnehmer (21), ein Kommunikationsmodul (22) und Batterien (24) angeordnet sind. Dabei kann das als Kupplungskopf ausgebildete mobile Gerät (11) mit den Verbindungsmitteln (23) vorzugsweise am letzten Wagen eines lokbespannten Zuges an eine Hauptluftleitung (31) angeflanscht werden. Zur Durchführung von geführten Bremsproben ist im Kupplungskopf (11) ein Druckaufnehmer (21) vorgesehen, der mit einem im Kupplungskopf (11) integrierten Kommunikationsmodul (22) in einer Wirkverbindung steht. Das Kommunikationsmodul (22) kommuniziert per Bluetooth oder Wifi mit den Kommunikationsgeräten (12, 13), mit denen der jeweilige Prozess einer vollen oder vereinfachten Bremsprobe mit den entsprechenden Prüfabschnitten in der festgelegten Reihenfolge gesteuert und geregelt wird. Bei eingeschränkter Signalqualität kann für die Kommunikation alternativ auch das konventionelle Netz des Kommunikationsmoduls (22) genutzt werden. Die Kommunikationsgeräte (12, 13) sind vorzugsweise als Handhelds auf der Basis eines sogenannten Smartphones ausgeführt und mit einem Kartenleser versehen. Anstelle der Kartenleser kann für die Personalidentifikation auch die an sich bekannte QR-Code Technologie genutzt werden. In diesem Fall besitzen die Kommunikationsgeräte eine eingebaute Kamera und die Decodierung des Codes wird in einer entsprechenden Applikation (APP) realisiert.

Ein jedes der Kommunikationsgeräte (12,13) ist sowohl dem Bremsprobenberechtigten (Wagenmeister / Visiteur) als auch dem Lokomotivführer persönlich zugeordnet, die sich mit ihrer ID - Karte / über Einlesen des QR-Codes , am Gerät identifizieren und anmelden.

Bei einem erfindungsgemässen Verfahren zur Durchführung von geführten Bremsproben an lokbespannten Eisenbahnzügen mit variabler Wagenzusammenstellung, insbesondere von Güterzügen wird der als mobiles Gerät ausgebildete Kupplungskopf (11) mit Verbindungsmitteln (23) vorzugsweise am letzten Wagen an eine Hauptluftleitung (31) angeflanscht. Zur Aktivierung für eine Bremsprobe sind in einer Kommunikationseinheit (12, 13) beispielsweise entsprechende Applikationen (Apps) hinterlegt. Eine Kommunikationseinheit (12, 13) kommuniziert beispielsweise mittels bekannter Bluetooth-Technologie oder Wifi, bei eingeschränkter Signalqualität auch über das konventionelle Netz mit einem in Kupplungskopf (11) integrierten Bluetooth-Modul (22). Dieses steuert und regelt den jeweiligen Prozess einer vollen oder vereinfachten Bremsprobe mit den entsprechenden Prüfabschnitten in der festgelegten Reihenfolge, ohne dass dieser Prozess gegenüber den geltenden Vorschriften verändert wird.

Während der verschiedenen Phasen der Bremsprobe kommuniziert ein Handheld (12) des Wagenmeisters / Visiteurs mit dem Kommunikationsgerät (13) eines Lokomotivführers auf dem Führerstand einer Lokomotive und gibt ihm sowohl die entsprechenden Handlungsbefehle, wie auch Rückmeldungen. Nach Abschluss der Bremsprobe erfolgt ebenfalls eine Meldung mit einem Zugfreigabecode an den Lokomotivführer auf der Lokomotive. Ohne erfolgreiche Bremsprobe gibt die Einrichtung (1) keine Fahrtfreigabe. Sämtliche Befehle und Rückmeldungen im Rahmen einer geführten Bremsprobe werden dabei einschliesslich der Identifikation der handelnden Personen (Bremsprobenberechtigter, Lokomotivführer) in den Geräten (12, 13) gespeichert und den jeweiligen Bremsproben zugeordnet, sowie rückverfolgbar dokumentiert.

**Bezugszeichen**

| | |
|---|---|
| 1 | Einrichtung zur Durchführung von geführten Bremsproben |
| 11 | als Kupplungskopf ausgebildetes, mobiles Gerät |
| 12 | Kommunikationsgerät (Handheld mit Kartenleser oder Kamera) des Wagenmeister / Visiteurs |
| 13 | Kommunikationsgerät (Handheld mit Kartenleser oder Kamera) des Lokomotivführers |
| 21 | Druckaufnehmer |
| 22 | Kommunikationsmodul |
| 23 | Verbindungsmittel |
| 24 | Batterien |
| 25 | Handgriff zum Anziehen und Lösen des Kupplungskopfes |
| 31 | Hauptluftleitung eines lokbespannten Zuges |

## Patentansprüche

1. Einrichtung (1) zur Durchführung von Bremsproben an Schienenfahrzeugen mit Druckluftbremsen,
**dadurch gekennzeichnet, dass**
die Einrichtung (1) ein als Kupplungskopf ausgebildetes mobiles Gerät (11) aufweist, welches ein Kommunikationsmodul (22) aufweist, welches mit einrichtungsfremden Kommunikationsgeräten (12, 13) kommuniziert.

2. Einrichtung (1) nach Anspruch 1,
**dadurch gekennzeichnet, dass**
das Gerät (11) Verbindungsmittel (23) aufweist, um mit einer Hauptluftleitung (31) eines Schienenfahrzeuges verbunden zu werden.

3. Einrichtung (1) nach Anspruche 1 oder 2,
**dadurch gekennzeichnet, dass**
das Gerät (11) einen Druckaufnehmer (21) und Batterien (24) aufweist, die mit dem Kommunikationsmodul (22) in einer Wirkverbindung stehen.

4. Einrichtung (1) nach einem der Ansprüche 1 bis 3,
**dadurch gekennzeichnet, dass**
das Gerät (11) einen Handgriff (25) zum Verbinden und Lösen des Gerätes (11) an eine Hauptluftleitung (31) eines Schienenfahrzeuges aufweist.

5. Einrichtung (1) nach Anspruch 4,
**dadurch gekennzeichnet, dass**
das Kommunikationsmodul (22), der Druckaufnehmer (21) und die Batterien (24) im Handgriff (25) des Gerätes (11) angeordnet sind.

6. Einrichtung (1) nach einem der Ansprüche 1 bis 6,
**dadurch gekennzeichnet, dass**
das Kommunikationsmodul (22) von einem einrichtungsfremden Kommunikationsgerät (12, 13) steuerbar ausgebildet ist.

7. Einrichtung (1) nach einem der Ansprüche 1 bis 6,
**dadurch gekennzeichnet, dass**
das Kommunikationsmodul (22) als drahtloses Kommunikationsmodul ausgebildet ist, vorzugsweise für Funkübertragung mit Bluetooth-Übertragungsverfahren ausgebildet ist.

8. Einrichtung (1), nach einem der Ansprüche 1 bis 7,
**dadurch gekennzeichnet, dass**
das Kommunikationsmodul (22) mit dem einrichtungsfremden Kommunikationsgerät (12, 13) persönliche Identifikationsmerkmale des Benutzers des Kommunikationsgerätes (12, 13) austauscht.

9. Verfahren zur Durchführung von Bremsproben an Schienenfahrzeugen mit einer Einrichtung nach einem der Ansprüche 1 bis 8,
**dadurch gekennzeichnet, dass**
das Gerät (11) mit Verbindungsmitteln (23) an eine Hauptluftleitung (31) des Schienenfahrzeuges angeflanscht wird und die Aktivierung einer Bremsprobe über ein einrichtungsfremdes Kommunikationsgerät (12, 13) ausgelöst wird.

10. Verfahren zur Durchführung von Bremsproben nach Anspruch 9,
**dadurch gekennzeichnet, dass**
das externe Kommunikationsgerät (12, 13) mit einer Applikation ausgestattet ist, beispielsweise als aufrufbares Programm, welches den Prozess einer vollen oder vereinfachten Bremsprobe mit den entsprechenden Prüfabschnitten in einer festgelegten Reihenfolge in Form von optischen Anweisungen anzeigt und bei definierten Prüfabschnitten ein definiertes Signal resp. Befehl an das Gerät (11) der Einrichtung (1) übermittelt und/oder von diesem empfängt.

11. Verfahren zur Durchführung von Bremsproben nach Anspruch 10,
**dadurch gekennzeichnet, dass**
sämtliche Signale resp. Befehle und Rückmeldungen im Rahmen einer Bremsprobe einschliesslich von personifizierten Identifikationsdaten der jeweils handelnden Personen (Bremsprobenberechtigter, Lokomotivführer) gespeichert werden, vorzugsweise in den externen Kommunikationsgeräten (12, 13).

12. Bremsprüfeinrichtung zur Durchführung von Bremsproben an Schienenfahrzeugen aufweisend eine Einrichtung (1) nach Anspruch 1 bis 9 sowie mindestens ein Kommunikationsgerät (12, 13) zur drahtlosen Kommunikation mit der Einrichtung (1), welches einen integrierten Programmspeicher zur Ausführung von Programmen sowie ein Display zur optischen Anzeige von Informationen aufweist.

13. Bremsprüfeinrichtung nach Anspruch 12, dass das Kommunikationsgerät (12, 13) ein Kartenlesegerät, eine integrierte Kamera und/oder einen Scanner, vorzugweise einen Fingerscanner, aufweist um personifizierte Daten der Benutzer des Kommunikationsgerätes (12, 13) zu erfassen.
